# EUROPEAN PATENT APPLICATION

(11) **EP 4 434 917 A1**
(43) Date of publication of application: **25.09.2024**
(21) Application number: 23163504.6
(22) Date of filing: 22.03.2023
(51) Int. Cl.: B65G 11/12, B65G 65/00, B65G 69/16, B65B 21/10, B65G 11/20, B65G 11/14

(54) **A SYSTEM FOR GUIDING AN OBJECT BETWEEN AN UPPER AND LOWER LEVEL, A CHUTE AND A METHOD THEREFORE**

(71) Applicant: Anker Andersen A/S, 7160 Tørring (DK)
(72) Inventor: Gamtofte, Michael, 7160 Tørring (DK); Kristensen, Allan, 7160 Tørring (DK); Ørnhøj Petersen, Carsten, 7160 Tørring (DK); Koed Toullec, Sebastien, 7160 Tørring (DK)
(74) Representative: Patrade A/S

(57) **Abstract**

The present invention relates to a system for guiding an object from a first level to a second lower level into a container. It is an object of the invention to provide a system (100), a method and a chute for transferring an object from a sorting line into a container without breaking the object. The system (100) comprises a container (30) and a chute (10), said chute having an upper end (17) with an inlet (13), a lower end (18) with an outlet, a sliding surface extending from the upper end to the lower end, said sliding surface being configured to guide the object (1) and side walls extending along the sliding surface (11) from the upper end to the lower end,
wherein the upper end of the chute is configured to be arranged at the first level along a first axis and the container (30) is configured to be arranged at the lower end of the chute (10) for receiving the object (1),
wherein said chute and/or container is configured to pivot around an axis being substantially parallel to the first axis, and
wherein said system (100) comprises one or more holding means (16) for holding the chute (10) and/or the container (30) in an angled position relative to the other.

## Description

### Field of the Invention

The present invention relates to a system, a method and a chute for guiding an object from a first level to a second lower level into a container. The system comprises a container and a chute, said chute having an upper end with an inlet, a lower end with an outlet, a sliding surface extending from the upper end to the lower end, said sliding surface being configured to guide the object and side walls extending along the sliding surface from the upper end to the lower end,
wherein the upper end of the chute is configured to be arranged at the first level along a first axis and the container is configured to be arranged at the lower end of the chute for receiving the object,
wherein said chute and/or container is configured to pivot around an axis being substantially parallel to the first axis, and
wherein said system comprises one or more holding means for holding the chute and/or the container in an angled position relative to the other.

### Background of the Invention

In many sorting plants for returnable and recyclable containers the glass containers, e.g. glass bottles and glass jars, which are returned are transferred into a large container. In many cases the glass containers break upon impact with the container or other objects stored in the container.

The means of transferring the containers into a large container may be a conveyor, a slide or a chute. Because the container needs to be moved away from the sorting plant, the transfer means are placed above the walls of the container thereby causing the containers to fall a distance from the transfer means into the container and likely break the containers upon impact.

Different arrangements are known for transferring objects from an upper level to a lower level adjusting the distance between the bottom of the chute and the bottom of the container and gradually increase this distance. However, most of the systems have drawbacks of being rather cumbersome and complicated to operate or not suitable for handling fragile objects.

Specifically, when considering transferring fragile objects from a sorting line, where the objects are ejected from the sorting line by additional applied force to the object, the objects must be guided in a suitable way from the upper ejected level to a lower level of the collection container without any risk of breaking the containers.

### Object of the Invention

One objective of the invention is to overcome one or more of the before mentioned shortcomings of the prior art.

An objective of the invention is to achieve a system for transferring a fragile object from an upper level into a lower level, especially, for transferring glass containers from a sorting line to a container.

One further object of the invention is to achieve a system for decelerating the object during the transfer from the upper level to the lower level to limit the risk of damaging the object as it reaches the lower level.

### Description of the Invention

One objective of the invention is achieved by a system for guiding an object from a first level to a second lower level into a container.

The system comprises a container and a chute. The chute comprises an upper end with an inlet, a lower end with an outlet, a sliding surface extending from the upper end to the lower end, and side walls each extending along the sliding surface from the upper end to the lower end.

The sliding surface is configured to guide the object.

The upper end of the chute is configured to be arranged at the first level along a first axis and the container is configured to be arranged at the lower end of the chute for receiving the object.

The chute and/or container is configured to pivot around an axis being substantially parallel to the first axis.

The system furthermore comprises one or more holding means for holding the chute, the container or both in an angled position relative to the other.

The sliding surface guides the object from the inlet to the outlet, due to an inclination of the sliding surface and the chute setting the object into a sliding motion. In another aspect, the object is guided along the sliding surface, where the sliding motion is caused by a force exerted onto the object from being ejected or transferred into the inlet of the chute, from a machine or manual labour arranged in connection with the inlet.

Guiding the object may also be referred to as transferring the object.

In one embodiment the chute may be configured as an open chute wherein an area opposite to the sliding surface is unobstructed. In another embodiment the chute may be configured as a closed chute wherein an area opposite to the sliding surface is obstructed by e.g., a cover or a ceiling. The area opposite to the sliding surface can cover the entire area between the inlet and the outlet, or the area can cover only a part of the area between the inlet and the outlet.

In one embodiment, the chute may comprise one or more flaps arranged along the sliding surface between the inlet and outlet. The flaps being configured to decelerate the object when guided along the chute from the inlet to the outlet.

In one embodiment the one or more flaps may be mounted on the side walls of the chute. The flaps may be arranged perpendicular or at an angle relative to a sliding direction between the inlet and the outlet. In another embodiment the flaps may be arranged adjacent to each other, in a stacked pattern or a chevron-shaped pattern. The flaps may comprise a bendable or flexible material, for absorbing an impact force from an object hitting the flap and thus reducing the risk of the object breaking upon impact with the flap. Thereby, the material and placement of the flaps effect the amount of deceleration imposed onto the object guided through the chute.

In one embodiment, the sliding surface of the chute may be a straight surface from the inlet to the outlet. In another embodiment of the system, the sliding surface may comprise one or more bends, spirals and/or obtuse, right and/or reflex angles.

The one or more holding means for holding the chute in an angled position may be a toothed rack, a threaded rod, a winding gear, a flat bar sliding in between a braking system and/or a punched flat bar with locking pins. In one embodiment the chute is adapted to pivot between a vertical position and a horizontal position.

In one embodiment the container may comprise at least three or four vertical walls, or the walls may be cylindric. In a further embodiment of the container, a bottom part of the container comprises channels for accommodating e.g. a forklift or pallet jack, or the bottom may be adapted for receiving a generic pallet for lifting the entire container by lifting said pallet.

In a further embodiment of the system, the upper end of the chute is configured to pivot around the first axis.

The chute is preferably arranged onto a supporting frame and/or a machine feeding the inlet with one or more objects at the upper end of the chute, where the lower end of the chute comprises complete clearance below the chute. As such the chute is configured to pivot around a first axis arranged at the upper end of the chute, where the lower end is lowered or raised relative to a container by pivoting the chute. One effect of lowering the chute into the container, is that a fall distance of the object from the outlet of the chute to the bottom of a container is minimal and thus the object is not damaged due to the fall. One effect of raising the chute is that as a volume of objects in the container is increased, the outlet is not blocked, and the fall distance of the objects is maintained such that the objects are not damaged after exiting the outlet. One further effect of raising the chute is that the chute may become clear of the container, thus enabling the container to be moved away from underneath the chute.

In another embodiment, the chute may be mounted on the container, thereby enabling the container and chute to be moved and arranged onto existing sorting lines, other chutes or object feed inlet.

In a further embodiment of the system, the container is configured to pivot around a second axis arranged substantially parallel to the first axis.

One effect of configuring the container to pivot around a second axis substantially parallel to the first axis is that the objects may be distributed in an even layer in the container. One effect of configuring the container and chute to pivot independently around two respective axes is that the outlet of the chute is able to transfer an object to any location inside the container, thereby filling the container evenly and avoiding breakage of any objects.

In a further embodiment of the system, the chute comprises at least an upper part and a lower part configured to be slidably displaced from the upper part between a retracted position and an extended position so that the upper part and the lower part form a chute with a continuous sliding surface and continuous side walls when in the retracted position, in the extended position and in any intermediate position between the retracted position and extended position.

In one aspect the lower part is configured to be telescopically displaced from the upper part.

One effect of configuring the chute with a lower part configured to be slidably or telescopically displaced from an upper part is that by extending the lower part to a fully extended position, the distance between the outlet of the chute and the bottom of the container is minimal and the risk of damaging the object is reduced. One further effect of telescopically displacing the lower part of the chute is that as the volume of objects in the container is increased, the outlet is not blocked, and the fall distance of the objects is maintained such that the objects are not damaged after exiting the outlet.

One further effect of configuring the chute with a lower part being slidably or telescopically displaced from an upper part is that a single chute can guide and decelerate objects into containers of many different sizes and shapes.

In a further embodiment of the system, the chute is adapted with guiding means for guiding the lower part relative to the upper part when being slidably displaced.

In one aspect the continuous sliding surface and continuous side walls may be achieved by arranging guiding means onto the chute for guiding and supporting the lower part on the outside of the upper part or by arranging the lower part to slide into a cavity of the upper part, thus enabling the lower part to be slidably or telescopically displaced from the upper part.

In a further embodiment of the system, the chute is adapted with first mechanical means for performing the displacement of the lower part.

In one aspect the means for slidable or telescopic displacement may be a toothed rack, a threaded rod, a winding gear, a flat bar sliding in between a vise or braking system and/or a punched flat bar with locking pins, adapted for holding the lower part in a retracted position, an extended position or in any intermediate positions.

In another aspect the means for slidable or telescopic displacement may be powered by means such as an electric linear actuator, a hydraulic cylinder, a pneumatic actuator, air bellow and/or a cardan shaft, belt drive driven by a stepper motor or a servo motor or comparable means. These exemplary means are meant as such and are not considered an exhaustive list of suitable powered means.

In a further embodiment of the system, the system comprises a cover arranged opposite the sliding surface to enclose a volume along the sliding surface.

One advantage of providing the cover opposite the sliding surface, between the upper end of the chute and at a distance down the chute, may be that any objects transferred or ejected rapidly into the inlet of the chute are stopped from flying away from or out of the chute.

In a further embodiment the cover may be configured as a slim brace for ensuring that objects are kept inside the chute when injected into the inlet of the chute. In another embodiment of the cover, the cover may comprise a lid configured for being opened in order to access the enclosed volume of the chute. In another embodiment of the cover, the cover may be adapted for receiving and holding the one or more flaps arranged along the sliding surface.

In a further embodiment of the system, the lower part of the chute may also comprise a cover with any one or more of the aforementioned embodiments of the cover.

In a further embodiment of the system, the one or more flaps are arranged in an angled position relative to the sliding surface and/or the side walls.

One effect of angling the one or more flaps is that the sliding movement of the object is decelerated but never completely stopped. One further effect is that the angled flaps also ensure that the objects slide along the sliding surface, as the objects are directed towards the middle of the sliding surface towards the outlet.

In a further embodiment of the system, the one or more of the flaps comprise mechanical means adapted for rotating the flaps around a third axis substantially parallel with the side walls or cover.

In one embodiment of the system, the means for arranging the one or more flaps onto the side walls or the cover may be mechanical means. In one aspect the mechanical means may be springs in a hinge, configured for making the one or more flaps rotate around a third axis, thereby ensuring that the one or more flaps can absorb an impact force of an object.

In another embodiment of the system, the mechanical means adapted for rotating the one or more flaps may be powered means, such as a stepper motor, a servo motor or gearing and/or a belt drive driven by a stepper motor or a servo motor. One advantage of rotating the one or more flaps is that the amount of deceleration achieved by the flaps is variable and the flaps can rotate to better suit a larger or smaller object and/or multiple objects at once.

In one embodiment of the system, at least two flaps may be adapted to rotate independently of each other.

One effect of rotating the flaps independently of each other is that the amount of deceleration of the object is variably adjustable by the independent rotation and the flaps can rotate independently to better suit a larger or smaller object and/or multiple objects at once. Thus, congestion in the chute is avoidable by rotating the one or more flaps arranged along the sliding surface.

In one embodiment of the system, the chute comprises an end stop arranged at the outlet of the chute configured to decelerate the object.

In one embodiment of the end stop, the end stop is arranged a distance away from the sliding surface, such that the outlet is defined as the space between the edge of the sliding surface and the end stop, and the end stop extends in a distance between the two side walls of the chute.

In one embodiment of the end stop, the end stop is arranged perpendicular to the sliding surface, thereby the end stop is configured to substantially slow the sliding movement of the object before the object is transferred through the outlet and into a container. In another aspect of the end stop, the end stop is configured for rotating around a fourth rotational axis substantially parallel to an extend of the end stop. The rotation of the end stop may be achieved by a swivel bracket, a hinge or bearing arranged on the two side walls, or the rotation may be achieved by powered means e.g., a stepper motor or a servo motor.

In one embodiment of the system, the system comprises one or more controllers, first powered means configured for pivoting the chute and/or second powered means configured for pivoting the container, and an object sensor configured for outputting a qualitative object sensor signal. The one or more controllers are configured for receiving the qualitative object sensor signal. The one or more controllers are furthermore configured for controlling the first and/or second powered means based on the received quantitative object sensor signal.

The controller may be a micro-controller, a micro-processor, a general-purpose processing unit, a programmable logic device, or an analogue control circuit. The controller may be configured to determine an output based on one or more inputs received from the one or more object sensors, said output may be transmitted to one or more powered means comprised in the system.

In one embodiment, the powered means configured for pivoting the chute and/or pivoting the container are an electric linear actuator, a hydraulic cylinder, a pneumatic actuator, an air bellow, a stepper motor, a servo motor, an electromagnet, and/or an electric hydraulic cylinder. In another aspect the holding means are pivoted by any of the powered means combined with a cardan axle, gearing and/or a belt drive. These exemplary means are meant as such and are not considered an exhaustive list of suitable powered means.

The one or more outputs of the controller sent to the powered means are signals directing the powered means to adjust the holding means of the chute and the holding means of the container to rotate the chute and/or the container in an angled position relative to the other. The rotation of the chute and/or the container may also be relative to the number of objects in the container.

In one embodiment of the system, the system comprises third powered means configured for slidably displacing the lower part and/or fourth powered means configured for rotating the one or more flaps. The one or more controllers are configured for controlling the third and/or fourth powered means based on the received quantitative object sensor signal.

In one embodiment of the system, the controller is configured for controlling the extension and retraction of the lower part of the chute in combination with controlling the angled position of the chute and/or the container relative to the other and relative to the extension of the lower part. One advantage of controlling the two holding means and the means for telescopically displacing the lower part together is that the system can fill any container with minimal risk of breaking the objects upon impact with the container and/or other objects.

In one embodiment of the system, the one or more object sensors are adapted to generate an input based on measuring a number of objects accumulated in the container, measuring a weight of the container or measuring a filling height of the container.

In one embodiment of the object sensor, the one or more object sensors are counting sensors configured for counting a number of objects passing the inlet or outlet of the chute. The counting sensor can be an infrared sensor or a proximity switch sensor pair. In this embodiment the input generated by the object sensor is a signal indicating that a new object is transferred through the chute and into the container, and the controller accumulates the number of objects in the container, utilising the input to determine the output of the controller.

In one further embodiment of the object sensor, the one or more object sensors are weight sensors arranged in the container and/or the holding means of the container, configured for weighing the container. The weight sensor can sense the weight of the container, or the sensor can sense the force applied to the holding means and determine the weight of the container from the applied force. Based on the input from the weight sensor, the controller can determine the number of objects in the container from the weight of the container, thereby utilising the input to determine the output of the controller.

In one further embodiment of the object sensor, the one or more object sensors are a machine vision sensor arranged at the lower end of the chute for detecting the number of objects passing through the outlet of the chute or for detecting a filling height of the container. The sensed number of objects or the filling height is transmitted to the controller and utilised to determine the output of the controller.

In one embodiment the one or more flaps, sliding surface, side walls, cover, end stop and/or container may comprise a surface made of a resilient material or absorbing material e.g., the material may be a rubber, foam, plastic, fiber and/or composite material, for further deceleration of/protecting the object.

One effect of configuring the one or more surfaces with a resilient material is that the risk of breaking the object is further reduced and less deceleration is required from the one or more flaps or the end stop.

In one embodiment of the system, the system comprises a computer programme product comprising instruction to define one or more output signals based on the qualitative object sensor signal received from the one or more object sensors. The output signals instruct the controller of the operation of the first, second, third and/or fourth powered means. The system furthermore comprises a computer-readable medium where the computer programme product is stored.

One advantage of providing a computer programme product configured for defining the one or more output signals based on one or more qualitative object sensor signals received from the one or more object sensors is that the computer programme product is easily reconfigured to adapt the system if there is a change in any parameters, wherein any parameters are the physical size of the object, the chute and/or the container, and/or if there is a change in the qualitative object sensor signal and/or the object sensors.

One objective of the invention is achieved by a method of guiding one or more objects from a first level to a second lower level into a container comprising acts of:
- providing a chute having an upper end with an inlet and a lower end with an outlet, a sliding surface extending from the upper end to the lower end, said sliding surface being configured to guide the objects, and side walls each extending along the sliding surface from the upper end to the lower end,
- arranging the upper end of the chute at the first level along a first axis;
- providing a container configured at the lower end of the chute for receiving the objects;
- adjusting an angular position of the chute, the container or both by pivoting the chute around the first axis and/or
   pivoting the container around a second axis arranged substantially parallel to the first axis, and
- transferring one or more objects into the inlet of the chute.

In one embodiment the method may furthermore comprise acts of:
- adjusting the extension and/or retraction of the slidable or telescopic displacement of the lower part of the chute; and/or
- adjusting the rotation of the one or more flaps relative to the other flaps and/or independently.

The effects and advantages of the method are generally in line with the effects and advantages already discussed for the system and the various embodiments of the system.

A further objective of the invention may be achieved by use of any of the embodiments of the system disclosed herein for guiding one or more objects received from a conveyor into a container without breaking said objects with the inlet of the one or more systems arranged onto an object outlet of a conveyor.

The use of the system may also be for sliding or transferring one or more objects into a container without damaging or denting the object.

The one or more objects may be received from any given object outlet, from e.g., an automatic or manual sorting plant or line, or from a conveyor. The system may also be arranged at an outlet of a chute connected to e.g., a garbage duct for receiving fragile objects.

The effects and advantages of the use of the system are generally in line with the effects and advantages already discussed for the system and the various embodiments of the system.

A further objective of the invention may be achieved by a chute for guiding an object from a first level to a second lower level into a container. The chute comprises an upper end with an inlet, a lower end with an outlet, a sliding surface extending from the upper end to the lower end, and side walls extending along the sliding surface from the upper end to the lower end.

The sliding surface is configured to guide the object between the upper end and the lower end.

The upper end of the chute is configured to be arranged at the first level along a first axis and to pivot around the first axis. The chute furthermore comprises one or more holding means for holding the chute in an angled position.

The chute is preferably arranged onto a supporting frame and/or a machine feeding the inlet with one or more objects at the upper end of the chute, thereby the lower end of the chute comprises complete clearance below the chute. As such the chute is configured to pivot around a first axis arranged at the upper end of the chute, then by pivoting the chute the lower end is lowered or raised vertically. One effect of lowering the chute into a container is that the fall distance of the object from the outlet of the chute to the bottom of a container is minimal and thus the object is not damaged due to the fall. One effect of raising the chute is that as the volume of objects in the container is increased, the outlet is not blocked and the fall distance of the objects is maintained such that the objects are not damaged after exiting the outlet. One further effect of raising the chute is that the chute may become clear of the container, thus enabling the container to be moved away from underneath the chute.

In a further embodiment, the chute comprises one or more flaps arranged between the inlet and the outlet and extending along the sliding surface. The flaps are configured to decelerate the object when guided from the inlet to the outlet.

In a further embodiment of the chute, the chute comprises at least an upper part and a lower part configured to be slidably displaced from the upper part between a retracted position and an extended position so that the upper part and the lower part form a chute with a continuous sliding surface and continuous side walls when in the retracted position, in the extended position and in any intermediate positions between the retracted position and the extended position.

In a further embodiment of the chute, the chute is adapted with guiding means for guiding the lower part relative to the upper part when being slidably or telescopically displaced.

In a further embodiment of the chute, the chute is adapted with first mechanical means for performing the displacement of the lower part.

In a further embodiment of the chute, the chute comprises a cover arranged opposite to the sliding surface to enclose a volume along the sliding surface.

In a further embodiment of the chute, the chute comprises an end stop arranged at the outlet of the chute configured to decelerate the object.

The embodiments of the chute may include the embodiments of the chute comprised in the system as previously disclosed in the above. The effects and advantages of the embodiments of the chute in the system are also present for the stand-alone chute.

### Description of the Drawing

Figure 1a illustrates one embodiment of the chute in a tilted position.
Figure 1b illustrates one further embodiment of the chute in a tilted position.
Figure 1c illustrates one embodiment of the chute in a level position.
Figure 1d illustrates a rear view of the chute in a level position.
Figure 2 illustrates one further embodiment of the chute.
Figure 3a illustrates one embodiment of a system arranged on a conveyor.
Figure 3b illustrates one embodiment of a system arranged on a conveyor.
Figure 4a illustrates one embodiment of a system with a tilted container.
Figure 4b illustrates one embodiment of a system with a tilted container.
Figure 5 illustrates an underneath view of the container.
Figure 7 illustrates one embodiment of a system arranged on a conveyor.

### Detailed Description of the Invention

| **Reference:** | **Reference number:** |
|---|---|
| Object | 1 |
| Chute | 10 |
| System | 100 |
| Sliding surface | 11 |
| Level position | 117 |
| Tilted position | 119 |
| Side walls | 12 |
| Inlet | 13 |
| Outlet | 14 |
| End stop | 141 |
| First axis | 15 |
| Holding means | 16 |
| Upper end | 17 |
| Lower end | 18 |
| Cover | 19 |
| Flaps | 20 |
| Method | 200 |
| Providing | 210 |
| Transferring | 220 |
| Adjusting | 230 |
| Holding means | 26 |
| Container | 30 |
| Container frame | 31 |
| Second axis | 35 |
| Holding means | 36 |
| Level position | 37 |
| Intermediate position | 38 |
| Tilted position | 39 |
| Conveyor | 4 |
| Continuous sliding surface | 41 |
| Continuous side walls | 42 |
| Upper part | 43 |
| Lower part | 44 |
| Guiding means | 45 |
| Means | 46 |
| Retracted position | 47 |
| Intermediate positions | 48 |
| Extended position | 49 |
| Controllers | 50 |
| Output signals | 51 |
| Object sensor | 52 |
| Qualitative object sensor signal | 53 |
| Computer-readable medium | 54 |

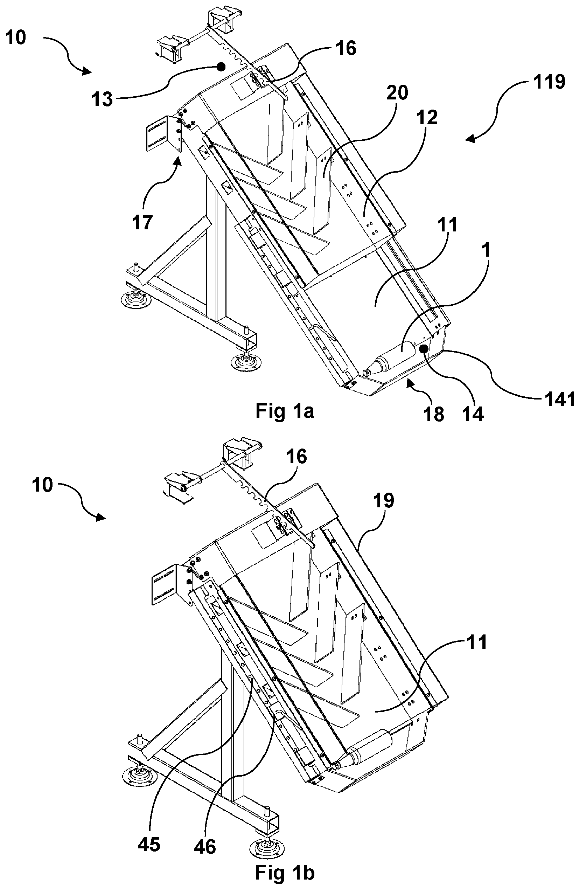

Figure 1a illustrates one embodiment of a chute 10 with an upper end 17 with an inlet 13 and a lower end 18 with an outlet 14. A sliding surface 11 extends from the upper end 17 to the lower end 18 with two side walls 12 extending along the sliding surface 11 from the upper end 17 to the lower end 18. The chute 10 is supported by a vertical frame with two adjustable feet and is configured for mounting to a vertical surface at the upper end 17.

A number of flaps 20 are arranged along the sliding surface 11 between the inlet 13 and the outlet 14 configured to decelerate a falling or sliding object 1. In this embodiment the flaps 20 are arranged in a chevron-shaped pattern, with a space provided between two opposite flaps 20. At the outlet 14 an end stop 141 is arranged perpendicular to the sliding surface 11.

The chute 10 comprises holding means 16 configured for holding the chute 10 in tilted position 119, a level position 117 (not shown) or any intermediate positions in-between the two positions. In this embodiment, the holding means 16 is a toothed rack.

Figure 1b illustrates one further embodiment of the chute 10 in a tilted position 119, wherein the chute 10 comprises guiding means 45 and means 46 configured for telescopically displacing a lower part 44 (not shown) of the chute 10 from an upper part 43 (not shown) of the chute 10. In this embodiment, a cover 19 is also arranged on the two side walls 12 extending opposite the sliding surface 11 between the upper end 17 and the lower end 18.

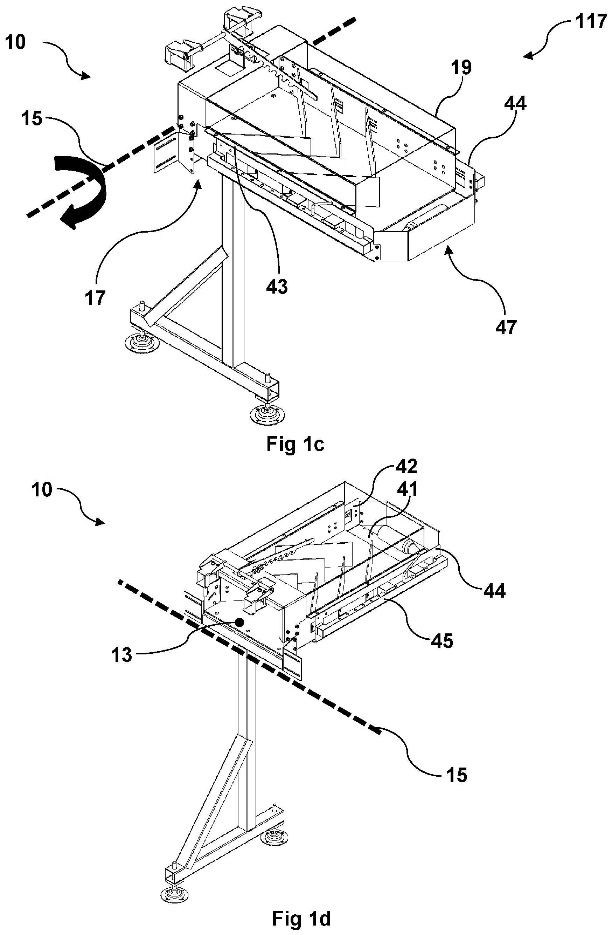

Figure 1c illustrates one further embodiment of the chute 10 in a level position 117, wherein the lower part 44 is in a retracted position 47 relative to the upper part 43. At the upper end 17 of the chute 10 a first axis 15 is arranged. The chute 10 is configured to pivot around the first axis 15, by at least two hinges arranged parallel to the first axis 15. By pivoting the chute 10 the chute 10 may be configured in a level position 117, a tilted position 119 or any intermediate positions in-between the two positions.

Figure 1d illustrates a rear view of the chute 10 in a level position 117, wherein the inlet 13 is seen at the upper end 17 of the chute 10, just above the first axis 15. The lower part 44 is in this illustration in the retracted position 47 relative to the upper part 43, yet a part of a continuous sliding surface 41 and two continuous side walls 42 are just visible near the outlet 14.

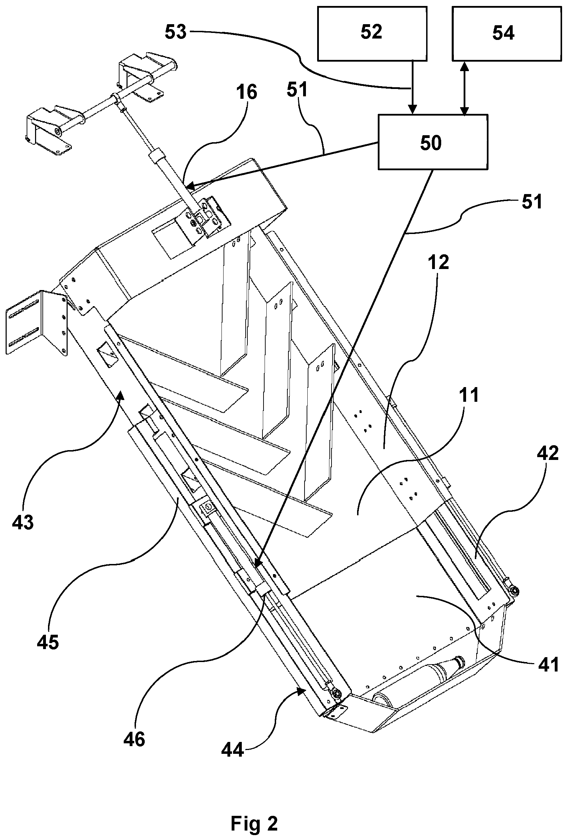

Figure 2 illustrates one further embodiment of the chute 10, wherein the holding means 16 comprises powered means for adjusting and holding the pivoting of the chute 10 around the first axis 15. In this embodiment the powered means is an electric linear actuator. In this embodiment the lower part 44 is displaced from the upper part 43 in an intermediate position 48 between the retracted position 47 and the extended position 49. This illustration shows how the sliding surface 11 is extended by the continuous sliding surface 41 and the two side walls 12 are extended by the continuous side walls 42.

In this embodiment the lower part 44 is telescopically displaced by means 46 comprising powered means for displacing and holding the lower part 44. In this embodiment the powered means is an electric linear actuator arranged on the guiding means 45.

Figure 2 also illustrates a controller 50 configured for receiving a qualitative object sensor signal 53 from one or more object sensors 52 and in two-way communication with a computer-readable medium 54. The controller 50 is configured for outputting one or more output signals 51 for controlling the powered means arranged on the holding means 16 and means 46. The controller can also be connected to powered means arranged on the holding means 36, of the container for pivoting the container 30 and/or to powered means arranged on the holding means 26 of the flaps for rotating the flaps 20.

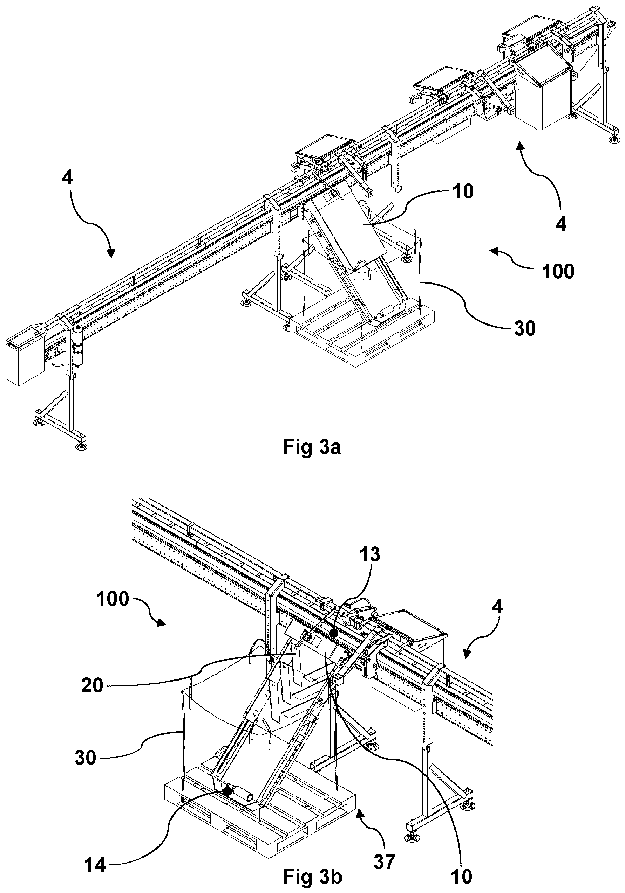

Figure 3a illustrates one embodiment of a system 100 arranged onto a conveyor 4, wherein the system 100 comprises a container 30 arranged on a pallet and a chute 10 arranged in the tilted position 119 into an inside volume of the container 30. The system 100 is configured for receiving one or more objects 1 from the conveyor 4 and guiding the objects 1 from a first level to a second level into the container 30.

Figure 3b illustrates one embodiment of the system 100 arranged onto a conveyor 4, wherein the system 100 comprises a chute 10 in a tilted position 119 inside the container 30 with a lower part 44 in an extended position 49 and a container 30 in a level position 37.

The inlet 13 of the chute 10 is arranged in connection with an outlet of the conveyor 4. When one or more objects 1 are transferred into the inlet 13, the objects 1 slide along the sliding surface 11 and a sliding speed of the objects 1 is decreased by the flaps 20 arranged along the sliding surface 11. Once the objects 1 reach the outlet 14 of the chute 10, the sliding speed of the objects 1 is sufficiently decreased and the objects 1 are transferred into the container 30 without risk of breaking.

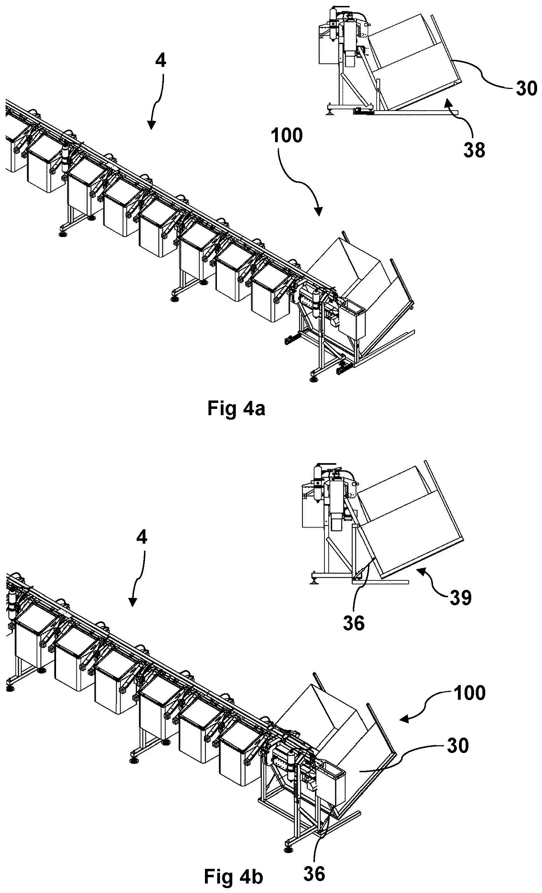

Figure 4a illustrates one embodiment of the system 100 arranged on a conveyor 4, where the container 30 is arranged in an intermediate position 38.

Figure 4b illustrates one embodiment of the system 100 arranged on a conveyor 4, where the container 30 is arranged in a tilted position 39. In this illustration, the container 30 comprises a holding means 36 configured for pivoting the container around a second axis 35 and holding the container in any position in-between a level position 37 and a tilted position 39. In this embodiment, the holding means 36 is an electric linear actuator.

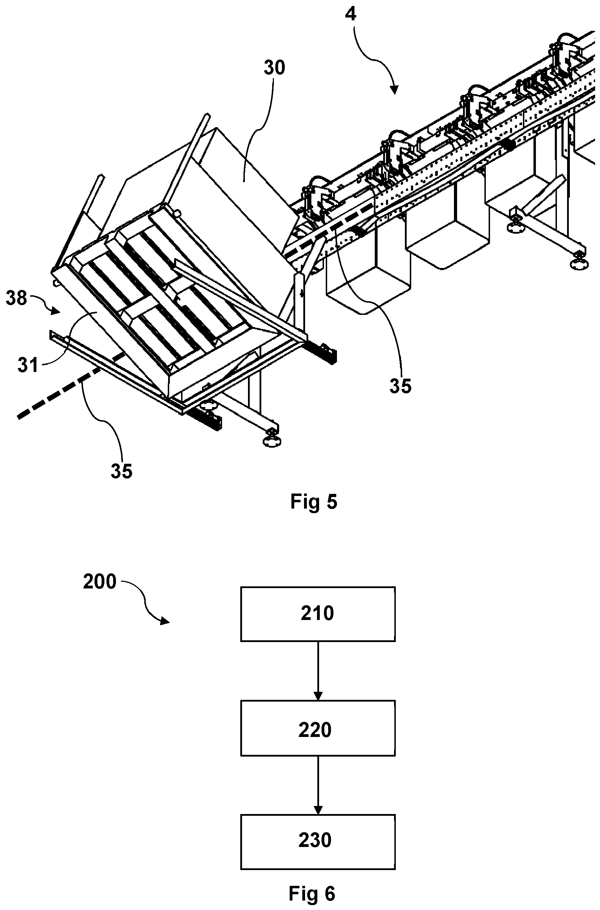

Figure 5 illustrates an underneath view of the system 100 arranged on a conveyor 4. In this embodiment the container 30 is arranged in the intermediate position 38 and the system 100 comprises a container frame 31 for tilting and holding a pallet placed on the container frame 31, where the pallet carries a container 30 for receiving one or more objects 1 from the chute 10.

In this illustration, the second axis 35 is illustrated at the container 30 substantially parallel to the first axis 15. In this embodiment, the holding means 36 for tilting the container 30 are arranged onto a vertical frame supporting the chute 10, where the vertical frame comprises two horizontal forks provided for stability.

Figure 6 illustrates one embodiment of the method 200 of guiding one or more objects 1 into a container comprising the acts of:
- providing 210 a chute 10 comprising an inlet 13 arranged at an upper end of the chute, a lower end with an outlet 14, a sliding surface 11 extending from the upper end to the lower end for guiding said objects 1 and two side walls 12 each extending along the sliding surface 11 from the upper end to the lower end;
- providing 210 a container 30 arranged at a lower end 18 adapted for receiving the objects 1 guided by the chute 10;
- providing 210 one or more flaps 20 arranged along the sliding surface 11 between the inlet 13 and outlet 14 for decelerating the speed of the objects 1 guided by the chute 10;
- transferring 220 one or more objects 1 into the inlet 13 of the chute 10;
- adjusting 230 one or more holding means 16 provided with the chute 10 for pivoting the chute around a first axis 15 arranged at an upper end 17; and/or
- adjusting 230 one or more holding means 26 provided with the container 30 for pivoting the container around a second axis 35 arranged substantially parallel to the first axis 15.

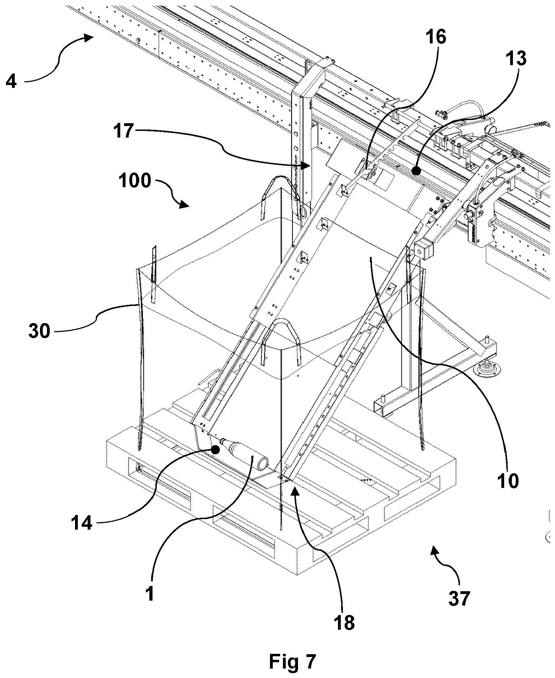

Figure 7 illustrates one embodiment of the system 100 arranged on a conveyor 4, the system 100 comprises a container 30 and a chute 10. The chute 10 is arranged in a tilted position extending into the container 30. An inlet 13 of the chute 10 is arranged at an outlet of the conveyor 4, at an upper end 17 of the chute. An outlet 14 of the chute 10 is arranged at a lower end 18 of the chute.

In this illustration an object 1 is about to exit the outlet 14 and be transferred to the container 30. The container is arranged in a level position 37.

## Claims

1. A system (100) for guiding an object (1) from a first level to a second lower level into a container, said system (100) comprises a container (30) and a chute (10), said chute having an upper end (17) with an inlet (13), a lower end (18) with an outlet (14), a sliding surface (11) extending from the upper end to the lower end, said sliding surface being configured to guide the object (1) and side walls (12) extending along the sliding surface (11) from the upper end to the lower end,
wherein the upper end (17) of the chute is configured to be arranged at the first level along a first axis (15) and the container (30) is configured to be arranged at the lower end (18) of the chute (10) for receiving the object (1),
wherein said chute and/or container is configured to pivot around an axis being substantially parallel to the first axis (15), and
wherein said system (100) comprises one or more holding means (16,36) for holding the chute (10) and/or the container (30) in an angled position relative to the other.

2. The system (100) according to claim 1 comprising one or more flaps (20) arranged between the inlet (13) and outlet (14) and arranged to extend along the sliding surface (11) of the chute, wherein said flaps are configured to decelerate the object (1) when guided from the inlet (13) to the outlet (14).

3. The system (100) according to any one of claim 1 or 2, where the upper end (17) of the chute (10) is configured to pivot around the first axis (15).

4. The system (100) according to any one or more of the preceding claims, where the container (30) is configured to pivot around a second axis (35) arranged substantially parallel to the first axis (15).

5. The system (100) according to any one or more of the preceding claims, wherein the chute (10) comprises at least an upper part (43) and a lower part (44) configured to be slidably displaced from the upper part (43) between a retracted position (47) and an extended position (49), so that the upper part and the lower part form a chute with a continuous sliding surface (41) and continuous side walls (42) when in the retracted position, in the extended position and in any intermediate position (48) between the retracted position and extended position.

6. The system (100) according to claim 5, wherein the chute (10) is adapted with guiding means (45) for guiding the lower part (44) relative to the upper part (43) when being slidably displaced.

7. The system according to any one or more of the preceding claims, wherein the system (100) comprises a cover (19) arranged opposite the sliding surface to enclose a volume along the sliding surface (11).

8. The system (100) according to any one or more of the preceding claims, wherein the chute (10) comprises an end stop (141) arranged at the outlet (14) of the chute (10) configured to decelerate the object (1).

9. The system (100) according to any one or more of the preceding claims, wherein the system (100) comprises:
One or more controllers (50), first powered means configured for pivoting the chute (10) and/or second powered means configured for pivoting the container, and an object sensor (52) configured for outputting a qualitative object sensor signal (53),
wherein the one or more controllers (50) are configured for receiving the qualitative object sensor signal (53) and for controlling the first and/or second powered means based on the received quantitative object sensor signal.

10. The system (100) according to claim 9, wherein the system (100) comprises third powered means configured for slidably displacing the lower part (44) and/or fourth powered means configured for rotating the one or more flaps (20), wherein the one or more controllers (50) are configured for controlling the third and/or fourth powered means based on the received quantitative object sensor signal.

11. The system (100) according to any one of claim 9 or 10 comprising a computer programme product comprising instruction to define one or more output signals (51) based on the qualitative object sensor signal (53) received from the one or more object sensors (52), wherein said output signals (51) are instructing the controller (50) of the operation of the first, second, third and/or fourth powered means, and a computer-readable medium (54) where the computer programme product is stored.

12. A method (200) of guiding one or more objects (1) from a first level to a second lower level into a container comprising acts of:
- providing (210) a chute (10) having an upper end (17) with an inlet (13), a lower end (18) with an outlet (14), a sliding surface (11) extending from the upper end to the lower end, said sliding surface being configured to guide the objects (1), side walls (12) extending along the sliding surface (11) from the upper end to the lower end;
- arranging the upper end (17) of the chute at the first level along a first axis (15);
- providing (210) a container (30) at the lower end (18) of the chute (10) for receiving the objects (1);
- adjusting (230) angular position of the chute, the container or both by pivoting the chute around the first axis (15) and/or pivoting the container around a second axis substantially parallel to the first axis, and
- transferring (220) one or more objects (1) into the inlet (13) of the chute (10).

13. Use of the system (100) according to any one or more of claims 1-11, for guiding one or more objects (1) received from a conveyor (4) into a container (30), wherein the inlet (11) of the one or more systems (100) are arranged onto an object outlet of a conveyor (4).

14. A chute (10) for guiding an object (1) from a first level to a second lower level into a container, said chute having an upper end (17) with an inlet (13), a lower end (18) with an outlet (14), a sliding surface (11) extending from the upper end to the lower end, said sliding surface being configured to guide the object (1) and side walls (12) extending along the sliding surface (11) from the upper end to the lower end,
wherein the upper end (17) of the chute is configured to be arranged at the first level along a first axis (15), wherein the chute is configured to pivot around the first axis (15), and
wherein the chute (10) comprises one or more holding means (16) for holding the chute in an angled position.

15. The chute according to claim 14 to be used in the system (100) according to any one or more of claims 1 to 11.
